(19) Europäisches Patentamt
European Patent Office
Office européen des brevets

(11) **EP 2 042 471 B1**

(12) **EUROPÄISCHE PATENTSCHRIFT**

(45) Veröffentlichungstag und Bekanntmachung des Hinweises auf die Patenterteilung:
**06.03.2019** **Patentblatt 2019/10**

(51) Int Cl.:
**C01B 17/88** *(2006.01)*     **C01B 17/90** *(2006.01)*
**C01B 17/94** *(2006.01)*

(21) Anmeldenummer: **08007902.3**

(22) Anmeldetag: **24.04.2008**

(54) **Verfahren zum Konzentrieren von Schwefelsäure**

Method for concentrating sulphuric acid

Procédé de concentration d'acide sulfurique

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.09.2007   DE 102007045699**

(43) Veröffentlichungstag der Anmeldung:
**01.04.2009   Patentblatt 2009/14**

(73) Patentinhaber: **PLINKE GmbH**
**61348 Bad Homburg (DE)**

(72) Erfinder:
• **Henke, Lüder**
**60529 Frankfurt (DE)**

• **Hetzel, Joachim**
**61440 Oberursel (DE)**
• **Pataky, Peter**
**61350 Bad Homburg (DE)**
• **Winterbauer, Hansjürgen, Dr.**
**61191 Rosbach (DE)**

(74) Vertreter: **Böhm, Brigitte et al**
**Weickmann & Weickmann**
**Patent- und Rechtsanwälte PartmbB**
**Postfach 860 820**
**81635 München (DE)**

(56) Entgegenhaltungen:
**DE-B3-102006 013 579     US-A- 4 138 309**

EP 2 042 471 B1

## Beschreibung

Bei der Reinigung und Konzentrierung von Schwefelsäure werden in vielen Fällen Verfahrensstufen kombiniert, die bei unterschiedlichem Druck betrieben werden. So werden Abfallsäuren häufig durch eine bei atmosphärischem Druck betriebene Strippung von organischen Verunreinigungen, von Salpetersäure und von Nitrose Gasen gereinigt und die Konzentrierung der Schwefelsäure erfolgt danach unter Vakuumbedingungen. Auch bei den Verfahren zur Hochkonzentrierung von Salpetersäure mit Schwefelsäure erfolgt die Abtrennung der Salpetersäure aus der Schwefelsäure meist ebenfalls durch eine Strippung unter atmosphärischen Bedingungen während die Schwefelsäure danach unter Vakuumbedingungen rückkonzentriert wird.

Für die beschriebenen Strippungen kommen entsprechend dem Stand der Technik Strippkolonnen zum Einsatz. Beim Betrieb dieser Kolonnen ergeben sich leistungsabhängig unterschiedliche Kolonnendifferenzdrücke, was zur Folge hat, dass die am Kolonnensumpf ablaufende Schwefelsäure eine höhere Temperatur aufweist, als es der Siedetemperatur bei atmosphärischem Umgebungsdruck entspricht. Wird diese überhitzte Schwefelsäure durch eine Pumpe zur nächsten Verfahrensstufe gefördert, kann es zum Ausdampfen von Wasser in der Pumpe kommen. Dadurch wird die Funktion der Pumpe eingeschränkt und die Pumpe kann beschädigt werden. Leitet man die überhitzte Säure in einen Zwischentank, der zur Atmosphäre entlüftet ist, kommt es zur spontanen Wasserverdampfung, was ebenfalls nicht erwünscht ist.

In der EP 0 615 951 B1 wird ein Verfahren zur Reinigung und Konzentrierung von Schwefelsäure beschrieben, bei dem die Verunreinigungen durch Strippen mit Dampf oder heißen Gasen im Gegenstrom aus der Schwefelsäure entfernt werden und anschließend die gereinigte Schwefelsäure in die erste Stufe eines Mehrstufen-Vakuumkonzentriersystems überführt wird. Dabei wird der Einsatz einer Pumpe dadurch vermieden, dass der Höhenunterschied zwischen Strippkolonne und dem Mehrstufen-Vakuumkonzentriersystem und das Betriebsvakuum des Mehrstufen-Vakuumkonzentriersystem so eingestellt werden, dass die gereinigte Säure von der Kolonne zum Mehrstufen-Vakuumkonzentriersystem überläuft. Dieses Verfahren hat aber einige Nachteile. So wird eine Dichtringleitung benötigt, die das Vorbeiströmen von Dampf, erwärmtem Gas, Luft oder Inertgas in das Konzentriersystem verhindern soll.

Durch den vorzusehenden Höhenunterschied ergibt sich eine verglichen zu anderen Lösungen höhere Gebäudehöhe wodurch sich die Gesamtinvestitionskosten für eine entsprechende Anlage erhöhen. Für die Apparateaufstellung und Konstruktion des Systems müssen die ungünstigsten Betriebsbedingungen angesetzt werden, da eine Anpassung während des Betriebes an beispielsweise leistungsabhängig auftretende unterschiedliche Kolonnendifferenzdrücke nicht möglich ist. Ein weiterer Nachteil des Systems ist, dass Betriebsschwankungen vom atmosphärischen Teil in den Vakuumteil übertrage werden und umgekehrt, so dass Störungen im kontinuierlichen Betrieb häufig auftreten.

Eine andere Lösung wird in der EP 1 284 928 B1 aufgezeigt. Die aus der Strippkolonne K1.1 kommende Schwefelsäure läuft hier entsprechend Fig. 3 ohne vorherige Durchmischung von oben in einen Tank B1. Aus diesem wird ein Teilstrom über einen Flashbehälter B2 gefördert und dort im Vakuum einer Entspannungsverdampfung unterzogen. Der Ablauf aus dem Flashbehälter B2 wird in den Behälter B1 zurück gefahren, so dass im Behälter B1 eine Temperaturreduktion erfolgt. Der Hauptstrom der Säure wird zur Aufkonzentrierung in einen unter Vakuum betriebenen liegenden Verdampfer W10 gefördert. Bei dem Beispiel wird angegeben, dass die Kolonnen bei einem Betriebsdruck von ca. 950 mbar betrieben werden und das Vakuum im Bereich der Schwefelsäurekonzentrierung bei ca. 80 mbar liegt. Es wird zwar hier nicht explizit beschrieben, jedoch muss der Druck im Behälter B1 so gewählt werden, dass dieser dem Betriebsdruck am Sumpf der Kolonne K1.1 entspricht oder höher liegt. Nur so kann verhindert werden, dass Wasser spontan in den Behälter B1 ausdampft. Entsprechend dem Stand der Technik lässt sich dies einfach beispielsweise durch Kopplung der Behälterentlüftung mit dem Kolonnensumpf, bzw. dem Sumpfverdampfer W4 erzielen. Eine solche Betriebsweise hat allerdings den Nachteil, dass im Falle einer Leckage eine Spontanverdampfung in die Umwelt auftreten würde. Die in Fig. 4 alternativ beschriebene Betriebsweise, bei der die Kolonne K1.1 bei erniedrigtem Druck betrieben wird, ermöglicht die Entlüftung des Behälters B1 zur Atmosphäre, da die aus der Kolonne K1.1 ablaufende Säure eine niedrigere Temperatur verglichen zur Siedetemperatur bei Atmosphärendruck hat und daher keine Spontanverdampfung in den Behälter erfolgt. Allerdings muss bei einer solchen Betriebsweise eine entsprechend höhere Gebäudehöhe in Kauf genommen werden, da eine Abtauchung des Systems (K1.1, W4) entsprechend dem eingesetzten Unterdruck zur Atmosphäre sichergestellt werden muss. Eine wie in Fig. 5 beschriebene direkte Entspannungsverdampfung ins Vakuum der aus K1.1 überlaufenden Säure entspricht der bereits in der EP 0 615 951 B1 beschriebenen Fahrweise mit den bereits aufgezeigten Nachteilen.

In der DE 10 2006 013 579 B3 wird beschrieben, dass eine überhitzte Schwefelsäure direkt oder über ein Ausdampfgefäß in die erste Stufe einer Schwefelsäurekonzentrierung eingeleitet werden kann.

Aus der DE 196 36 191 A1 ist es bekannt, die erste Konzentrierstufe mit der Strippkolonne zu verbinden, d.h. bei gleichem Druck zu betreiben.

In keiner der Druckschriften wird jedoch vorgeschlagen, überhitzte Schwefelsäure mit einem Teil der in einer nachgeschalteten Vakuumkonzentrierung erhaltenen rückkonzentrierten Schwefelsäure zu mischen.

Entsprechend dem Stand der Technik ist bislang kein einfaches Verfahren zur Lösung der Problematik der Weiterleitung von bezogen auf Atmosphärendruck überhitzter Schwefelsäure zu einer nachgeschalteten Schwefelsäurekonzentrierung bekannt, das nicht ähnliche oder die gleichen Nachteile aufweist wie die in den oben genannten Verfahren.

Der Erfindung liegt nun die Aufgabe zu Grunde, möglichst ohne zusätzliche Verfahrensschritte, bei möglichst geringer Gebäudehöhe und möglichst unter Erhaltung der in der überlaufenden Säure enthaltenen Energie diese Schwefelsäure, die bezogen auf Atmosphärendruck überhitzter ist, zu einer nachgeschalteten Schwefelsäurekonzentrierung weiterzuleiten.

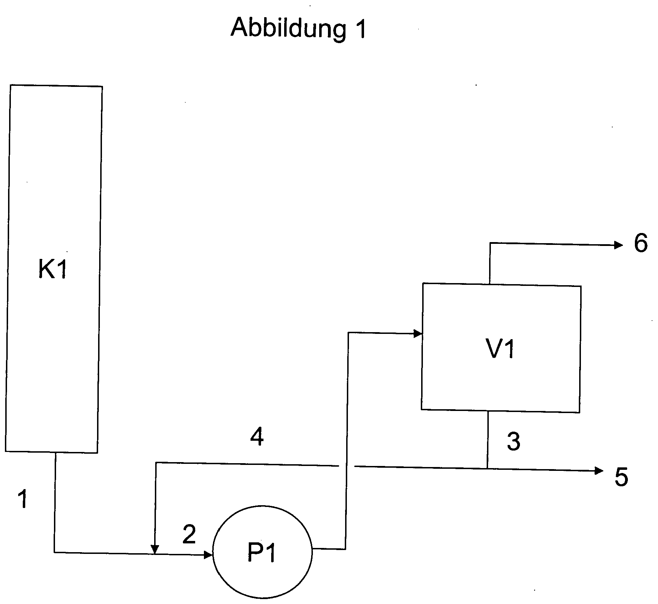

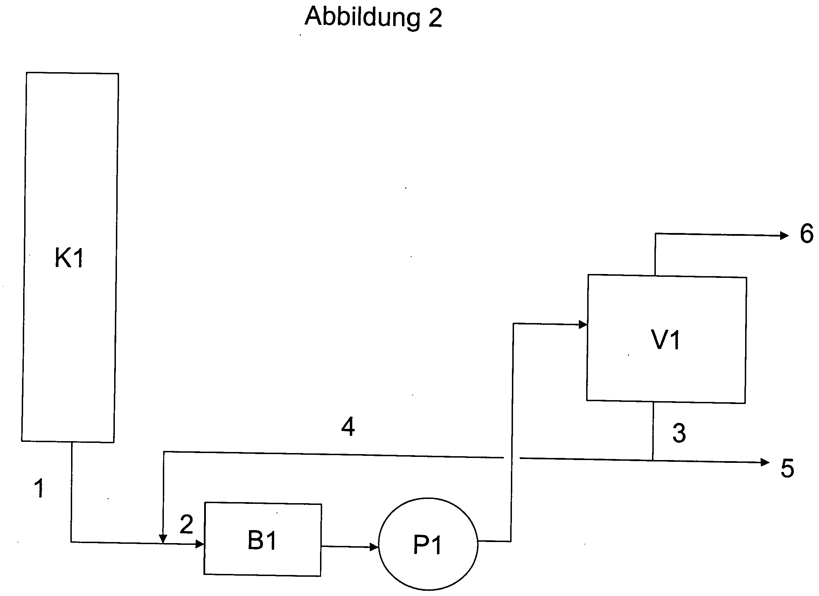

Erfindungsgemäß lässt sich nun diese Problematik überraschend einfach lösen, in dem man einen Teil M4 der rückkonzentrierten Säure [3] aus der der atmosphärischen Strippung nachgeschalteten Vakuumkonzentrierung [V1] mit der beispielsweise aus einer Kolonne [K1] überhitzt ablaufenden Schwefelsäure [1] mischt, wodurch sich die Mischung [2] ergibt, bevor diese der Pumpe [P1] (Abbildung 1) oder einem wie oben beschriebenen Tank [B1] (Abbildung 2) zugeführt wird. Der Rest der konzentrierten Schwefelsäure [5] und das Kondensat [6] werden aus dem Verfahren entsprechend ausgeschleust oder gegebenenfalls weiterbehandelt. Die Menge M4 an rückkonzentrierter Säure wird dabei mindestens so groß gewählt, dass die sich ergebende Mischung bezogen auf den Umgebungsdruck nicht mehr überhitzt ist.

Die erfindungsgemäß mindestens benötigte Menge M4 berechnet sich wie folgt:

$$M4 = [M2 * h(C2;T2) - M1 * h(C1;T1)] / h(C4;T4) \; ; \; T2 < Tsiede \, (C2; atm)$$

Dabei steht:

MX = Masse des Stoffstromes X [kg/h]

h(CX;TX) = Enthalpie der Schwefelsäure [kJ/kg] bei Schwefelsäurekonzentration CX des Stoffstromes X und Temperatur TX des Stoffstromes X

Als Mindestbedingung muss erfüllt sein, dass T2 niedriger liegt, als die Siedetemperatur Tsiede der sich ergebenden Mischung der Schwefelsäure M2 mit einer Schwefelsäurekonzentration C2; bei atmosphärischen Umgebungsdruck (atm).

Aus praktischen Gründen wird in der Regel immer eine etwas größere Menge M4 als theoretisch benötigt zugemischt, wodurch sichergestellt wird, dass auch bei kurzzeitig auftretenden Schwankungen die ungewollten Effekte nicht auftreten. Diese größere Menge kann beispielsweise durch einsetzen der Parameter für extreme, maximal zu erwartende Betriebsbedingungen berechnet werden. Allerdings sollte aus wirtschaftlichen Gründen die Menge nicht zu groß gewählt werden, da eine entsprechend größere Menge an Säure mit der Pumpe [P1] gefördert werden muss, wodurch sich ein höherer Strombedarf für das erfindungsgemäße Verfahren ergibt.

Das erfindungsgemäße Verfahren bietet gegenüber den Verfahren entsprechend dem Stand der Technik folgende wesentlichen Vorteile:

Durch die erfindungsgemäße Mischung eines Teils der bereits konzentrierten Säure mit der überhitzten Säure wird die Schwefelsäurekonzentration der Mischung und damit der Siedepunkt der Mischung unter atmosphärischen Bedingungen erhöht. Zusätzlich wird die Mischung abgekühlt, da die im Vakuum rückkonzentrierte Säure eine entsprechend niedrigere Temperatur hat. Durch die erfindungsgemäße Kombination beider Effekte erhält man eine Mischung, die unter atmosphärischen Umgebungsbedingungen nicht überhitzt ist und damit werden die durch eine Überhitzung verursachten Probleme vermieden. Gleichzeitig bleibt die Überhitzungsenergie in der Mischung erhalten und kann vollständig in der nachfolgenden Vakuumkonzentrierung zur Konzentrierung der Säure eingesetzt werden. Es wird kein zusätzlicher Flashbehälter wie aus dem Stand der Technik bekannt benötigt, wodurch sich der apparative Aufwand und auch der Regelaufwand beim Betrieb der Anlage reduziert. Dadurch liegen die Investitions- und auch die Betriebskosten des erfindungsgemäßen Verfahrens wesentlich niedriger. Dadurch, dass erfindungsgemäß die überlaufende Säure vor der Pumpe beziehungsweise vor dem Eintritt in einen Behälter mit der konzentrierten und kühleren Säure aus der Vakuumkonzentrierung gemischt wird, tritt hier nicht die Problematik auf, dass der Behälter unter dem gleichen Druck wie der vorgeschaltete Kolonnensumpf betrieben werden muss, um eine Spontanverdampfung zu verhindern. Dadurch sind Anlagen bei denen das erfindungsgemäße Verfahren eingesetzt wird sicherer zu betreiben. Die Gebäudehöhe kann mit dem erfindungsgemäßen Verfahren auf ein Minimum reduziert werden, da die Kolonne unabhängig von der Vakuumkonzentrierung aufgestellt werden kann und durch den Einsatz der Pumpe hier keine Überlaufhöhen berücksichtigt werden müssen. Der atmosphärische Bereich und der Vakuumbereich sind bei Einsatz des erfindungsgemäßen Verfahrens unabhängig von einander separiert und Schwankungen in einem Bereich beeinflussen nicht direkt den anderen Bereich, wodurch der Gesamtprozess sehr störungsarm und konstant betrieben werden kann.

Das erfindungsgemäße Verfahren kann bei allen Schwefelsäurekonzentrierprozessen angewendet werden, bei denen Verfahrensschritte kombiniert sind, die mit unterschiedlichem Druck betrieben werden. Bevorzugt wird das erfindungsgemäße Verfahren eingesetzt, wenn aus einem atmosphärischen Behandlungsschritt Schwefelsäure, die auf Grund der Bedingungen im dem atmosphärischen Behandlungsschritt eine höhere Temperatur aufweist als es dem Siedepunkt der Säure bei Umgebungsdruck entspricht, zu einem nachgeschalteten Verfahrensschritt weitergeleitet wird, in dem die Schwefelsäure unter verglichen zum Umgebungsdruck reduziertem Druck aufkonzentriert wird. Der Umgebungsdruck entspricht in der Regel dem mittleren Luftdruck der Atmosphäre, der auf Meereshöhe 101325 Pa beträgt. Der Umgebungsdruck am Ort der Anlage zur Konzentrierung von Schwefelsäure, bei der das erfindungsgemäße Verfahren eingesetzt wird, wird bei der Planung der Anlage entsprechend berücksichtigt. Ein typisches Beispiel, bei dem das erfindungsgemäße Verfahren bevorzugt eingesetzt wird, ist die atmosphärische Strippung von Schwefelsäure, wie sie bei der Reinigung und Konzentrierung von Abfallschwefelsäure und bei der Hochkonzentrierung von Salpetersäure mit Schwefelsäure eingesetzt wird. Typische Abfallschwefelsäuren fallen beispielsweise bei Nitrierreaktionen wie bei der Nitrierung von Toluol, bei der Herstellung von Nitroestern und bei der Explosivstoffproduktion an. Auch Alkohol und Esterproduktion sind typische Beispiele. Durch die bei diesen Verfahren zur Anwendung kommenden Kolonnen, die abhängig von der Leistung, bei der sie betrieben werden, unterschiedlichen Druckverlust aufweisen, fällt bei diesen Verfahren die Schwefelsäure im Sumpf der Kolonne in der Regel überhitzt bezogen auf den Siedepunkt bei atmosphärischem Druck an. Daher ist das erfindungsgemäße Verfahren besonders für diese Anwendungsbeispiele geeignet.

Das beschriebene Verfahren kann aber auch bei anderen Anwendungen ohne Kolonne, bei denen beispielsweise die Schwefelsäure unter bezogen auf Umgebungsdruck erhöhtem Druck vorbehandelt wird, eingesetzt werden.

Bei Anwendung des erfindungsgemäßen Verfahrens können für die Vakuumkonzentrierung der Schwefelsäure alle entsprechend dem Stand der Technik bekannten Verfahren eingesetzt werden wie beispielsweise Vertikalverdampfer, Horizontalverdampfer, Naturumlaufverdampfer, Zwangsumlaufverdampfer, Schrägrohrverdampfer, etc. Diese Aufzählung soll nur einige Beispiel nennen und schränkt die Anwendung des erfindungsgemäßen Verfahrens nicht ein. Prinzipiell können auch Vakuumverfahren zur Konzentrierung der Säure zur Anwendung kommen bei denen zusätzliche Verfahrensschritte wie Vakuumstrippkolonnen etc. integriert sind. Die Vakuumkonzentrierung wird in der Regel bei Drücken zwischen 50000 und 500 Pa betrieben.

Erfindungsgemäß kann die Vakuumkonzentrierung ein oder mehrstufig durchgeführt werden.

Erfindungsgemäß kann bei einer mehrstufigen Vakuumkonzentrierung die zur Mischung eingesetzte rückkonzentrierte Schwefelsäure aus einer beliebigen der Vakuumkonzentrierstufen eingesetzt werden, solange die sich ergebende Temperatur der Mischung niedriger als die Siedetemperatur der Mischung bei Umgebungsdruck liegt.

Als Materialien für Pumpen, Behälter, Rohrleitungen etc. werden die entsprechend dem Stand der Technik bekannten bei den jeweiligen Betriebsbedingungen korrosionsbeständigen Materialien gewählt. Das beschriebene Verfahren lässt sich prinzipiell auch bei anderen Prozessen mit ähnlicher Problemstellung anwenden und ist nicht nur auf die Anwendung für Schwefelsäure begrenzt.

## Patentansprüche

1. Verfahren zur Konzentrierung von Schwefelsäure mit einem Behandlungsschritt unter Umgebungsdruck und einer nachgeschalteten Vakuumkonzentrierung, wobei

   a) durch den Behandlungsschritt unter Umgebungsdruck eine Schwefelsäure erhalten wird, die eine höhere Temperatur aufweist, als es dem Siedepunkt der Säure bezogen auf den Umgebungsdruck entspricht,
   b) diese überhitzte Schwefelsäure mit einem Teil der in der nachgeschalteten Vakuumkonzentrierung erhaltenen, rückkonzentrierten Schwefelsäure so gemischt wird, dass sich eine Mischung ergibt, deren Temperatur niedriger ist als die Siedetemperatur der Mischung bezogen auf den Umgebungsdruck, und
   c) die Mischung aus b) dann mittels einer Pumpe in die dem Behandlungsschritt unter Umgebungsdruck nachgeschaltete Vakuumkonzentrierung gefördert wird,

   und wobei der Behandlungsschritt unter Umgebungsdruck eine Strippung von Schwefelsäure ist, wie sie bei der Reinigung und Konzentrierung von Abfallschwefelsäure und bei der Hochkonzentrierung von Salpetersäure mit Schwefelsäure eingesetzt wird.

2. Verfahren nach Anspruch 1, **dadurch gekennzeichnet, dass** die Mischung zunächst in einen Zwischentank geführt wird, bevor sie mittels einer Pumpe in die dem Behandlungsschritt unter Umgebungsdruck nachgeschaltete Vakuumkonzentrierung gefördert wird.

3. Verfahren nach Anspruch 1, **dadurch gekennzeichnet, dass** die mindestens benötigte Menge an rückkonzentrierter Schwefelsäure M4 gemäß folgender Formel berechnet wird:

$$M4 = [M2 * h(C2;T2) - M1 * h(C1;T1)] / h(C4;T4) ; T2 < Tsiede (C2; atm)$$

wobei

MX = Masse des Stoffstromes X [kg/h]
c(CX;'TX) = Enthalpie der Schwefelsäure [kJ/kg] bei Schwefelsäurekonzentration CX des Stoffstromes X und Temperatur TX des Stoffstromes X

und als Mindestbedingung erfüllt sein muss, dass T2 niedriger liegt, als die Siedetemperatur Tsiede der sich ergebenden Mischung M2 der Schwefelsäure mit einer Schwefelsäurekonzentration C2; bei atmosphärischem Umgebungsdruck (atm), und wobei M1 für die Menge an Schwefelsäure steht, die aus dem Behandlungsschritt unter Umgebungsdruck kommt.

4. Verfahren nach Anspruch 1 bis 3, **dadurch gekennzeichnet, dass** die Menge an rückkonzentrierter Schwefelsäure etwas größer gewählt wird als theoretisch benötigt, wodurch sichergestellt wird, dass auch bei kurzzeitig auftretenden Schwankungen die ungewollten Effekte nicht auftreten.

5. Verfahren zur Konzentrierung von Schwefelsäure mit einem Behandlungsschritt unter bezogen auf Umgebungsdruck erhöhtem Druck und einer nachgeschalteten Vakuumkonzentrierung, wobei

a) durch den Behandlungsschritt unter bezogen auf Umgebungsdruck erhöhtem Druck eine Schwefelsäure erhalten wird, die eine höhere Temperatur aufweist, als es dem Siedepunkt der Säure bezogen auf den Umgebungsdruck entspricht,
b) diese überhitzte Schwefelsäure mit einem Teil der in der nachgeschalteten Vakuumkonzentrierung erhaltenen, rückkonzentrierten Schwefelsäure so gemischt wird, dass sich eine Mischung ergibt, deren Temperatur niedriger ist als die Siedetemperatur der Mischung bezogen auf den Umgebungsdruck, und
c) die Mischung aus b) dann mittels einer Pumpe in die dem Behandlungsschritt unter bezogen auf Umgebungsdruck erhöhtem Druck nachgeschaltete Vakuumkonzentrierung gefördert wird.

6. Verfahren nach Anspruch 1, **dadurch gekennzeichnet, dass** die Vakuumkonzentrierung der Schwefelsäure mit einem Vertikaldampfer erfolgt.

7. Verfahren nach Anspruch 1, **dadurch gekennzeichnet, dass** die Vakuumkonzentrierung der Schwefelsäure mit einem Horizontalverdampfer erfolgt.

8. Verfahren nach Anspruch 1, **dadurch gekennzeichnet, dass** die Vakuumkonzentrierung der Schwefelsäure mit einem Naturumlaufverdampfer erfolgt.

9. Verfahren nach Anspruch 1, **dadurch gekennzeichnet, dass** die Vakuumkonzentrierung der Schwefelsäure mit einem Zwangsumlaufverdampfer erfolgt.

10. Verfahren nach Anspruch 7, **dadurch gekennzeichnet, dass** die Vakuumkonzentrierung der Schwefelsäure mit einem Vertikalverdampfer bei Drücken zwischen 50000 und 500 Pa erfolgt.

**Claims**

1. Process for concentrating sulfuric acid, said process comprising a treatment step under ambient pressure and a downstream vacuum-concentration process, wherein

a) a sulfuric acid is obtained by means of the treatment step under ambient pressure, which sulfuric acid has a higher temperature than that which corresponds to the boiling point of the acid based on the ambient pressure,
b) this superheated sulfuric acid is mixed with some of the re-concentrated sulfuric acid obtained in the downstream vacuum-concentration process so as to result in a mixture of which the temperature is lower than the boiling temperature of the mixture based on the ambient pressure, and
c) the mixture from b) is then conveyed by means of a pump to the vacuum-concentration process, which is downstream of the treatment step under ambient pressure,

and wherein the treatment step under ambient pressure is stripping of the sulfuric acid, as used during purification and concentration of waste sulfuric acid and during high-level concentration of nitric acid using sulfuric acid.

2. Process according to claim 1, **characterised in that** the mixture is firstly guided into an intermediate tank before being conveyed by means of a pump to the vacuum-concentrating process, which is downstream of the treatment step under ambient pressure.

3. Process according to claim 1, **characterised in that** the amount of re-concentrated sulfuric acid M4 that is at least required is calculated according to the following formula:

$$M4 = [M2 * h(C2;T2) - M1 * h(C1;T1)] / h(C4;T4) ; T2 < Tboil (C2; atm)$$

where

MX = mass of the material flow X [kg/h]
C(CX;'TX) = enthalpy of the sulfuric acid [kJ/kg] with sulfuric acid concentration CX of the material flow X and temperature TX of the material flow X

and a minimum condition having to be fulfilled whereby T2 is lower than the boiling temperature Tboil of the resulting mixture M2 of sulfuric acid having a sulfuric acid concentration C2; at atmospheric ambient temperature (atm), and M1 representing the amount of sulfuric acid that results from the treatment step under ambient pressure.

4. Process according to claims 1 to 3, **characterised in that** the amount of re-concentrated sulfuric acid is selected so as to be slightly greater than theoretically necessary, which ensures that the undesired effects do not occur, even in the event of short-term fluctuations.

5. Process for concentrating sulfuric acid, said process comprising a treatment step at pressure which is increased based on ambient pressure and comprising a downstream vacuum-concentration process, wherein

a) a sulfuric acid is obtained by means of the treatment step under pressure which is increased based on ambient pressure, which sulfuric acid has a higher temperature than that which corresponds to the boiling point of the acid based on the ambient temperature,
b) this superheated sulfuric acid is mixed with some of the re-concentrated sulfuric acid obtained in the downstream vacuum-concentration process such that a mixture results of which the temperature is lower than the boiling temperature of the mixture based on the ambient pressure, and
c) the mixture from b) is then conveyed by a pump to the vacuum-concentration process, which is downstream of the treatment step under pressure which is increased based on ambient pressure.

6. Process according to claim 1, **characterised in that** the sulfuric acid is vacuum-concentrated by means of a vertical evaporator.

7. Process according to claim 1, **characterised in that** the sulfuric acid is vacuum-concentrated by means of a horizontal evaporator.

8. Process according to claim 1, **characterised in that** the sulfuric acid is vacuum-concentrated by means of a gravity-return evaporator.

9. Process according to claim 1, **characterised in that** the sulfuric acid is vacuum-concentrated by means of a forced-circulation evaporator.

10. Process according to claim 7, **characterised in that** the sulfuric acid is vacuum-concentrated by means of a vertical evaporator at pressures between 50000 and 500 Pa.

**Revendications**

1.  Procédé pour concentrer l'acide sulfurique avec une étape de traitement sous la pression ambiante et une concentration sous vide branchée en aval, où

    a) par l'étape de traitement sous la pression ambiante on obtient un acide sulfurique qui présente une température plus élevée que ce qui correspond au point d'ébullition de l'acide par rapport à la pression ambiante,
    b) cet acide sulfurique surchauffé est mélangé avec une partie de l'acide sulfurique reconcentré obtenu dans la concentration sous vide branchée en aval de telle manière qu'il en résulte un mélange dont la température est plus basse que la température d'ébullition du mélange par rapport à la pression ambiante, et
    c) le mélange provenant de b) est ensuite transporté au moyen d'une pompe dans la concentration sous vide branchée en aval de l'étape de traitement sous la pression ambiante,

    et où l'étape de traitement sous la pression ambiante est un strippage de l'acide sulfurique tel qu'il est utilisé lors de la purification et la concentration d'acide sulfurique résiduaire et lors de la concentration élevée de l'acide nitrique avec de l'acide sulfurique.

2.  Procédé selon la revendication 1, **caractérisé en ce que** le mélange est d'abord conduit dans un réservoir intermédiaire avant d'être transporté au moyen d'une pompe dans la concentration sous vide branchée en aval de l'étape de traitement sous la pression ambiante.

3.  Procédé selon la revendication 1, **caractérisé en ce que** la quantité nécessaire au minimum d'acide sulfurique reconcentré M4 est calculée selon la formule suivante :

$$M4 = [M2 * h(C2 ; T2) - M1 * h(C1 ; T1)] / h(C4 ; T4) ; T2 < Tsiede (C2 ; atm)$$

    où

    MX = masse du courant de substance X [kg/h]
    c(CX ; TX) = enthalpie de l'acide sulfurique [kJ/kg]
    à la concentration d'acide sulfurique CX du courant de substance X et à la température TX du courant de substance X
    et comme condition minimale, doit être remplie la condition que T2 est plus basse que la température d'ébullition Tsiede du mélange résultant M2 de l'acide sulfurique avec une concentration d'acide sulfurique C2 ; à la pression ambiante atmosphérique (atm), et où M1 représente la quantité d'acide sulfurique qui provient de l'étape de traitement à la pression ambiante.

4.  Procédé selon les revendications 1 à 3, **caractérisé en ce que** la quantité d'acide sulfurique reconcentré est choisie un peu plus grande que ce qui est théoriquement nécessaire, de sorte qu'il est garanti que les effets indésirables de surviennent pas même lors de fluctuations survenant pendant une courte durée.

5.  Procédé pour concentrer l'acide sulfurique avec une étape de traitement sous une pression augmentée par rapport à la pression ambiante et une concentration sous vide branchée en aval, où

    a) par l'étape de traitement sous une pression augmentée par rapport la pression ambiante on obtient un acide sulfurique qui présente une température plus élevée que ce qui correspond au point d'ébullition de l'acide par rapport à la pression ambiante,
    b) cet acide sulfurique surchauffé est mélangé avec une partie de l'acide sulfurique reconcentré obtenu dans la concentration sous vide branchée en aval de telle manière qu'il en résulte un mélange dont la température est plus basse que la température d'ébullition du mélange par rapport à la pression ambiante, et
    c) le mélange provenant de b) est ensuite transporté au moyen d'une pompe dans la concentration sous vide branchée en aval de l'étape de traitement sous une pression augmentée par rapport la pression ambiante.

6.  Procédé selon la revendication 1, **caractérisé en ce que** la concentration sous vide de l'acide sulfurique a lieu avec un évaporateur vertical.

7. Procédé selon la revendication 1, **caractérisé en ce que** la concentration sous vide de l'acide sulfurique a lieu avec un évaporateur horizontal.

8. Procédé selon la revendication 1, **caractérisé en ce que** la concentration sous vide de l'acide sulfurique a lieu avec un évaporateur à circulation naturelle.

9. Procédé selon la revendication 1, **caractérisé en ce que** la concentration sous vide de l'acide sulfurique a lieu avec un évaporateur à circulation forcée.

10. Procédé selon la revendication 7, **caractérisé en ce que** la concentration sous vide de l'acide sulfurique a lieu avec un évaporateur vertical à des pressions entre 50000 et 500 Pa.

Abbildung 1

EP 2 042 471 B1

Abbildung 2

K1, V1, B1, P1, 1, 2, 3, 4, 5, 6

**IN DER BESCHREIBUNG AUFGEFÜHRTE DOKUMENTE**

**In der Beschreibung aufgeführte Patentdokumente**

- EP 0615951 B1
- EP 1284928 B1

- DE 102006013579 B3
- DE 19636191 A1